# EUROPEAN PATENT SPECIFICATION

(11) **EP 0 239 061 B1**
(45) Date of publication and mention of the grant of the patent: **04.08.1993**
(21) Application number: 87104288.3
(22) Date of filing: 24.03.1987
(51) Int. Cl.: G06K 9/72

(54) **Optical character reader apparatus and optical character reading method**
Optische Zeichenerkennungsvorrichtung und optisches Zeichenerkennungsverfahren
Dispositif et méthode de reconnaissance optique de caractères

(30) Priority: 24.03.1986 JP 63973/86
(43) Date of publication of application: 30.09.1987
(73) Proprietor: Oki Electric Industry Company, Limited, Tokyo 105 (JP)
(72) Inventor: Nagasawa, Hikoshi c/o Oki Electric Ind. Co. Ltd., Tokyo (JP); Ito, Kazuo c/o Oki Electric Ind. Co. Ltd., Tokyo (JP); Horii, Shigeru c/o Oki Electric Ind. Co. Ltd., Tokyo (JP); Tanoshima, Katsuhide c/o Oki Electric Ind. Co. Ltd, Tokyo (JP)
(74) Representative: Betten, Jürgen, Dipl.-Ing.

(56) References cited:
- GB-A- 1 201 178
- PATENT ABSTRACTS OF JAPAN, vol. 7, no. 75 (P-187)[1220], 29th March 1983; & JP-A-58 4424 (TOKYO SHIBAURA DENKI K.K.) 11-01-1983
- PATENT ABSTRACTS OF JAPAN, vol. 7, no. 93 (P-192)[1238], 19th Spril 1983; & JP-A-58 18 777 (FUJISTU K.K.) 03-02-1983
- Computer Structures:Principles and Examples; McGraw-Hill,1982

## Description

### 1. Field of the Invention

The present invention relates to an optical character reader (hereinafter referred to as OCR) apparatus adapted to yield a picture image signal by illuminating characters written on a document card with light from a light source to render reflected light therefrom to photoelectric conversion to provide an electric signal, extracting the feature of respective characters by taking out the original characters from the picture image signal one at a time, and collating the feature of the character extracted as such with a character pattern previously registered in a dictionary memory. More particularly it relates to a word collating system of an OCR adapted to extract a character group as a word, and collate the word so extracted with a word previously registered in the memory for recognizing characters on a document card.

A prior OCR is adapted, as disclosed in Japanese Patent Application No. 59-125033, to illuminate alphabetic characters written on a document card with a lamp, and focusing reflected light onto a photoelectric converter sensor through a lens to convert the picture image signal on the document card into an electric signal as an output from the sensor.

In succession, a pre-processing circuit takes out a fractional picture image corresponding to one character from the resulting line image and transmits it to a feature extracting circuit. The feature extracting circuit executes the so-called recognition algorithm adapted to extract the features of a character line or a background in conformity with a predetermined procedure. In succession, a character judgement circuit collates the resulting features with those of characters previously stored in a dictionary memory and delivers coincident character codes to a post-processing circuit. Three cases are considered thereupon as the output from the character judgement circuit: a plurality of character codes are yielded; only one character code is yielded; and no character code is yielded. The post-processing circuit will be operated for the above situation as follows: it delivers, when only one character is yielded, it, interpreting the concerning character has satisfactorily been recognized, to the outside; and with no character code being yielded as described above it deliveres a non-recognizable code from its output terminal as no dictionary to recognize the concerning character being existent; and furthermore with a plurality of character codes being yielded this situation may frequently be produced when the concerning character pattern well resembles another character patterns, and hence the concerning character pattern can not be fixed to at least one character code but have a pluraliy of character candidates therefor. There is a method to abandon unnecessary candidates among those candidates for selecting only one character code therefrom, by making use of previously known information indicating a certain character is not written on the document card adjoining to another certain character on the basis of the context thereof. For example, when "U" and "V" is yielded as those character candidates in an Engligh sentense with a character "Z" located in front of them, provided the "V" is regarded as being improper as the character to be located just behind the "Z", it is abandoned with a result of "U" being selected, and thus the "U" code is delivered from an output terminal. Thereupon, information concerning combinations of characters not adjoining to the concerning character code before and behind it can be employed at need by storing them as a table.

In addition, another method is also known to judge whether or not the candidate character is proper by noting adjacent two or three characters to previously provide the frequency of occrurrences of combinations of those characters (this is a known method called 2-gram, 3-gram, and generally n-gram).

Still another method is also known wherein a word is extracted from a character group read by a character judgement circuit to collate it with a word previously stored for judgement at a word level. Namely, character codes of characters constructing read words are collated in succession with those constructing stored words, and a certain stored word having the largest numbers of coincident character codes among those stored words can be judged as the read word.

However, these OCRs to determine the concerning character relying upon such methods as described above suffer from the following problems:
(a) The first method to previously store some information concerning combinations of characters not adjoining the concerning character before and behind it, and to abandon characters corresponding to the above information among a plurality of character candidates can not judge those candidates as being proper because only those combinations having the context of characters, which can obviously be prohibited, are provided as information, provided a plurality of characters not corresponding to those combinations are presented as the associated candidates.
(b) The second method to store the frequency of occurrences of combined characters for judgement of the concerning character on the basis of the above frequency can not judge characters having similar occurrence frequency as being proper, and furthermore it may judge, instead of a character actually written on a document card but with less occurrence frequency, another character having higher occrurrence frequency as being proper by mistake.
(c) The third method to extract any word for collation thereof with previously stored words takes much time for the collation with the word composed of many characters because it has an enormous amount of words to be collated.

Document GB-A-1 201 178 describes a known word identifying apparatus which comprises first storage means for storing for each character position of an input word a pluralitiy of possible characters, second storage means for storing a plurality of reference words containing the same number of characters as said input word, means for selectively combining said possible characters to form a plurality of possible input words, means for comparing each possible input word with all the stored reference words in succession and determining for each possible input word the corresponding reference word, and means for indicating which reference word most probably corresponds to the input word.

The document "Japanese Patent Abstract", March 29, 1983, vol. 7 No. 75 (P-187) (1220) of JP-A-584424 describes a Japanese word input device which feeds a KANA (Japanese syllabary) including KANJI (Chinese characters) through a ROMAJI (Japanese in Roman characters) keyboard, an abbreviated form "KANJI" of "KANJI", for example, which is fed through a ROMAJI keyboard, is transferred to a consonant train extracting part and a candidate collating part. At the train extracting part a character train "KANJI" is formed by extracting the consonants only out of "KANJI", and the KANJI like "manager (KANJI)", etc. corresponding to "KANJI" and the KANJI dictionary through a candidate retrieving part in reference to a consonant train index. The collation is carried out through a candidate collating part to the candidate spelling, and the unsuitable words are deleted out of the candidates. Then a candidate is selected at a candidate analyzing part and the selected candidate word is transferred to a writing part. This word is written into a storage part and a character train is displayed at a display part.

### SUMMARY OF THE INVENTION

In view of the drawbacks of the prior arts, it is an object of the present invention to provide an optical character reader (OCR) apparatus⁺⁾ capable of more securely judging, when a character on a document card can not be recognized and hence a plurality of character candidates are yielded, that character on a document card to be proper by uniquely selecting it from those candidates.
+) and reading method

Another object of the present invention is to provide an optical character reader apparatus⁺⁾ capable of character recognition even when character recognition can not be effected and hence no character candidate is presented.

Still another object of the present invention is to provide an optical character reader apparatus⁺⁾ capable of reducing processing time of collation.

These objects are solved by the optical character reader apparatus according to claim 1 and by the optical character reading method according to claim 6.

Accordingly an optical character reader apparatus (hereinafter, referred to as an OCR apparatus)⁺⁾ according to the present invention is adapted to illuminate characters on a document card with light from a light source to render reflected light therefrom to photoelectric conversion for thereby providing electric signal to yield a picture image signal, extracting the feature of each of characters by taking out the characters one at a time from the above picture image signal, and collating the feature so extracted with character patterns previously stored in a dictionary memory, for character recognition, and furthermore extracting a character group between successive two spaces as a word to collate the word extracted as such with words previously stored, for recognition of words on a document card.
+) and reading method

Moreover, the OCR apparatus⁺⁾ according to the present invention includes a word table selecting part for selecting a proper word table in a word dictionary memory correspondingly to the number of characters constituting the extracted word; a word-constituting character number judgement part for judging whether or not the number of characters of the extracted word is greater than a prescribed number; a vowel judgement part for judging, when the above numbers of characters constituting the extracted word is judged to be greater than a prescribed number in the word-constituting character number judgement part, whether or not each of those characters constituting the extracted word is a vowel, and removing, if so, a constituting character judged to be a vowel from a collation object; a word collating part for collating constituent characters constituting the extracted word after passing through the vowel judgement part with those characters constituting each word in a word table selected in the word table selecting part for evaluating the number of coincident characters; a candidate word retrieving part for selecting a candidate word having the largest number of coincident characters evaluated in the word collating part; and a post-processing part for delivering to the outside the candidate word selected in the candidate word retrieving part.

The above and other objects, features and advantages of the present invention will become more apparent from the following description when taken in conjunction with the accompanying drawings in which a preferred embodiment of the present invention is shown by way of illustrative example.

### BRIEF DESCRIPTION OF THE DRAWINGS

Fig. 1 is a block diagram illustrating an embodiment of an OCR apparatus according to the present invention;
Fig. 2 is a flow chart illustrating operation of a word collator circuit 12 of Fig. 1;
Fig. 3 (a) is a view illustrating a format of a memory table storing read results therein;
Fig. 3 (b) is a view illustrating a format of a word table, which previously stores words therein, in a word dictionary memory 13;
Fig. 4 is a block diagram illustrating a microprocessor circuit for executing functions and controls of a post-processing circuit 9 and a word collator circuit 12; and
Fig. 5 is a block diagram illustrating an I/O circuit connected to the microprocessor circuit of Fig. 4.

### DESCRIPTION OF THE PREFERRED EMBODIMENT

In what follows, an embodiment of an optical character reader apparatus according to the present invention will be described with reference to the accompanying drawings.

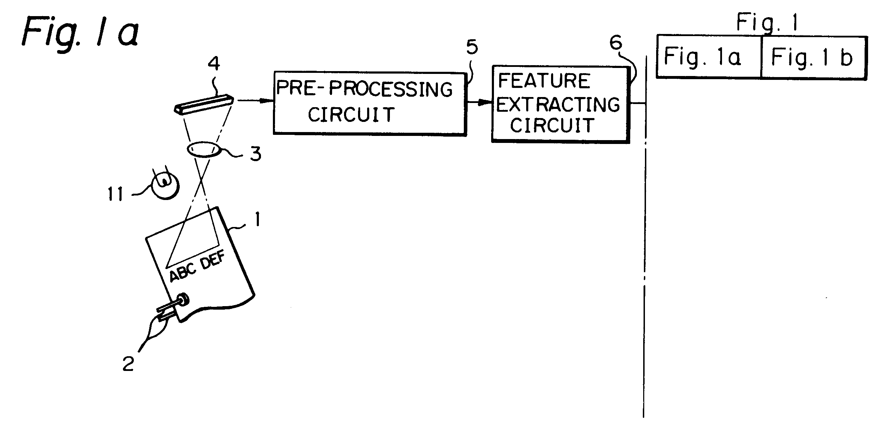

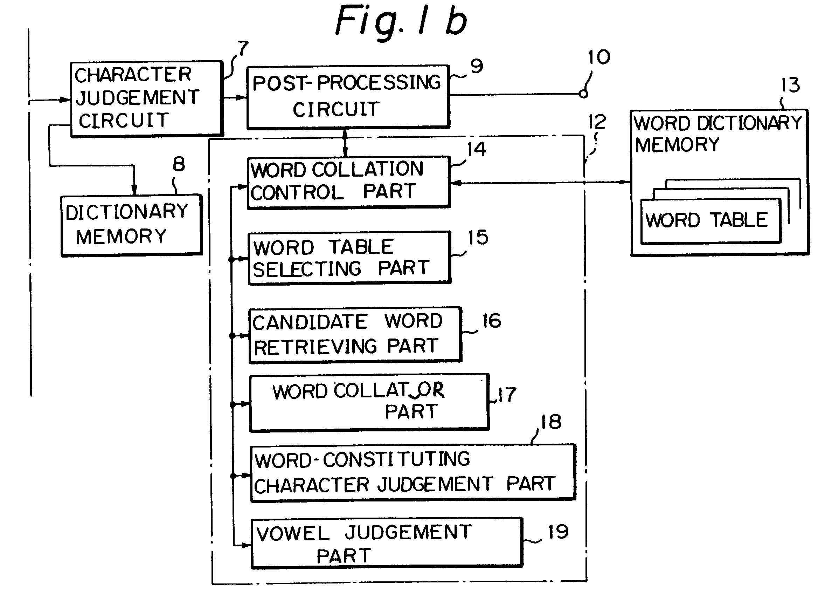

Fig. 1 illustrates an OCR apparatus according to the present invention.

As shown in the same figure, designated at 1 is a document card on which characters such as those in an English sentence are written mannually or by printing; 2 is a conveyor mechanism for conveying the document card 1 in conformity with a predetermined format; 3 is a focusing lens for focusing reflected light onto a photoelectric converter sensor 4 from an illumination lamp 11 (described later) on the document cart 1 and reflected therefrom; 4 is the photoelectric converter sensor for rendering the reflected light from the document card 1 to photoelectric conversion into an electric signal; 5 is a pre-processing circuit for converting an electric signal from the photoelectric converter sensor 4 to binary values to yield a binary picture image signal and taking out a picture image corresponding to one character therefrom; 6 is a feature extracting circuit for extracting the feature of a character in conformity with a predetermined procedure; 7 is a character judgement circuit described later for collating a dictionary memory 8 having feature data of characters previously registered therein with feature data being an output from the feature extracting circuit 6 and delivering a character code of a coincident character as a result of the collation so effected; 8 is a dictionary memory for previously registering therein character feature data while corresponding the character feature data to character codes of those characters, 9 is a post-processing circuit for effecting editing and output control, etc., corresponding to the judgement result in the character judgement circuit 7; 10 is an output terminal; and 11 is an illumination lamp.

In succession, operation of the OCR apparatus shown in Fig. 1 will be described.

First, with the document card 1 being travelled by means of the converyor mechanism 2, and illuminated with the illumination lamp 11, reflected light from the document card 1 is focused onto the photoelectric converter sensor 4 through the focusing lens 3 to yield as a sensor output a picture image signal on the document card 1 in a form of electric signal. The conveyor mechanism 2 is controlled by a control circuit (not shown), and such a picture image signal corresponding to a prescribed region on the document card 1 is written into a line image buffer memory (not shown) in the pre-processing circuit 5.

Then, the pre-processing circuit 5 takes out a picture image corresponding to one character from the resulting line picture image and transmits it to the feature extracting circuit 6. The feature extracting circuit 6 executes the so-called recognition algorithm to extract the contour of character lines and the feature of a background portion in conformity with a predetermined procedure. The character judgement circuit 7 collates the dictionary memory 8 having a dictionary for character recognition previously registered with the resulting feature, and delivers a coincident character code to the post-processing circuit 9. There are hereupon expected three types of cases for the output contents from the character judgement circuit 7: first one with a plurality of character codes being yielded; second one with only one character code being yielded; and third one with no character code being yielded. If with, thereupon, only one character code being yielded, the concerning character can be said to be recognized satisfactorily, while with no character code being yielded it is suggested that no dictionary to recognize the concerning character is existent in the document memory 8. In addition, with a plurality of character codes being yielded, it means that they are likely to be frequently produced when the concerning character pattern bears close resemblences to another character patterns, so as not to permit at least one character code to be fixedly yielded but to permit a plurality of character candidates to be yielded.

Successively, the post-processing circuit 9 extracts a word from a character group delivered in succession from the character judgement circuit 7 for effecting collation in a unit of this word. Moreover, since one of characters constituting the word has a plurality of character codes as described above, each of the plurality of character codes is processed as corresponding to the above one character.

In the following, operation of such word collation will be described.

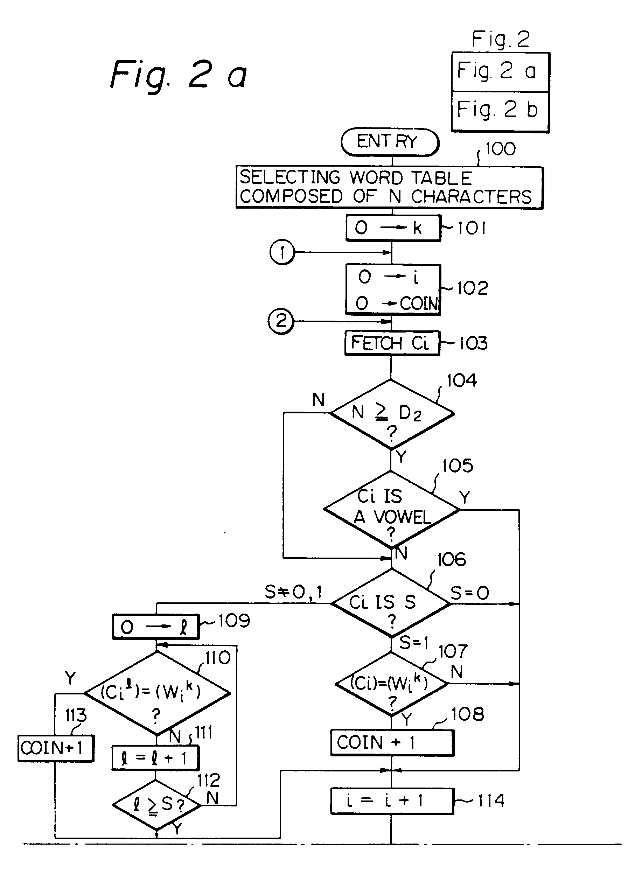

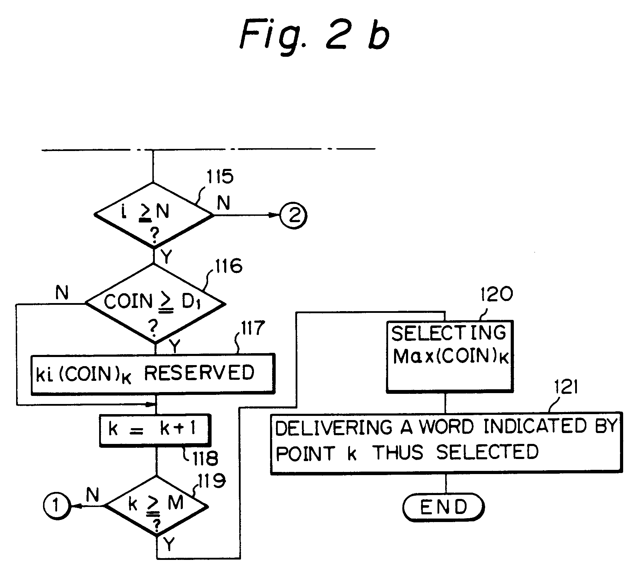

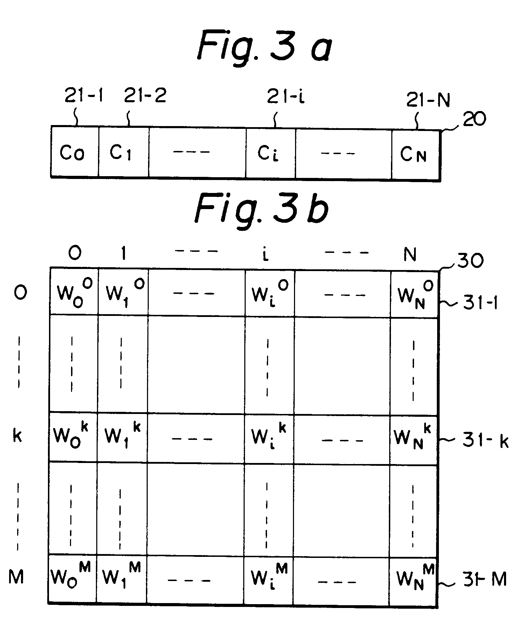

Referring to Fig. 1, designated at 12 is a word collator circuit, 13 is a word dictionary memory, 14 is a word collation control part, 15 is a word table selecting part, 16 is a candidate word retrieving part, 17 is a word collator part, 18 is a word-constituting character number judgement part, and 19 is a vowel judgement part. Fig. 2 is a flow chart illustrating operation of the word collator circuit 12. In addition, Fig. 3 (a) is a view illustrating a format of a memory table in which read results are stored, while Fig. 3 (b) is a view illustrating a format of a word table in the word dictionary memory 13, in which table words such as those in an English sentence are previously stored.

As, hereupon, illustrated in Fig. 3 (a), designated at 20 is a memory table for storing therein read results yielded by reading a character group written as a single word in English sentence, etc., by means of the OCR apparatus in conformity with the above-described procedure, and 21-1, 21-2, ..., 21-i, ..., 21-N are areas for storing read results of respective characters constituting a word with C0, C1, ..., Ci, ..., CN respectively indicating the contents of the storages thereof. Hereupon, N indicates the number of characters of a word. Moreover, i is a pointer indicative of the character number in the table 20. Furthermore, as illustrated in Fig. 3 (b), designated at 30 is a table, and 31-1, ..., 31-k, ..., 31-M are respectively storage locations of words registered in the table 30. The table 30 is therefore adapted to register M words therein.

Noting now the kth word 31-k, this word consists of N character, each character being designated at W0^{k}, W1^{k}, ..., Wi^{k}, ..., WN^{k}. Wi^{k} here represents the ith constituent character of the kth word registered in the word table.

Here, although Fig. 3 illustrates only the word table constituted by N characters, another many word tables may instead be expected depending on the numbers of constituent characters because of various types of constituent characters constituting words being considered, but they are here not shown in the figure for brevity. Accordingly, the present OCR apparatus is adapted to select a proper word table responsibly to the number of read characters and in a corresponding manner thereto.

First, the post-processing circuit 9 extracts as a word a character group disposed between adjacent spaces, and delivers it to the word collation control part 14 in the word collating circuit 12. Assuming here this word to be constructed with N characters, the word table selecting part 15 selects a word table composed of N characters in the word dictionary memory 13 (step 100). The word collator part 17 initializes a coincidence number counter "COIN" counted up when the character pointer i, word pointer k, ith character constituting a word in each word, and ith character as a read result are coincident with each other (step 101 and 102). In succession, the candidate word retrieving part 16 takes out the ith character Ci as a read result (step 103). Successively, the word- constituting character number judgement part 18 compares the number N of characters constituting a word as a read result with a constant D2 to thereby judge whether or not the former number N is greater than the latter constant D2 (step 104), and the control advances, if N < D2, to step 106. In addition, if $\text{N≧D2}$ , the vowel judgement part 19 judges whether or not the ith character Ci as the read result is a vowel (step 105), and if not, the control advances to step 106. While, if so, the judgement part 19 regards the ith character Ci to be a candidate character and the control advances to step 114 described later after removing it from a collation object.

In succession, step 106 judges the attribute of Ci. Here, the attribute means the number of character codes yielded as a read result, which number is indicated by S. This value S is, although not shown in the figure, known upon reading and hence is assumed to be stored. Thereafter, those candidate words yielded as described above and read results are rendered to the concerning judgement. Provided as a result of step 106 the character code number is s=0 (this means no candidate word is yielded), the control advances to step 114 descrbed later. And, provided the number is s=1 (this means only one candidate word is yielded), it is checked that the read result Ci and the ith constituent character Wi^{k} of the kth word in the word table are coincident with each other (step 107), and if coincident the coincident counter "COIN" is counted up (step 108), and otherwise the control advances to the step 114. Moreover, if s≠0, and s≠1, which means a plurality of character codes are yielded as a read result, the candidate word retrieving part 16 searches a plurality of numbers of candidates from ℓ = 0 to s (steps 109, 110, 111, and 112). If there is any coincident code thereamong, the coincident number counter "COIN" is counted up (step 113), and otherwise the control advances to step 114. In the step 114, the character number counter i is counted up, and if this counter i is less than N characters, the control returns to the step 103 to judge the next character with the same operation (step 115). Hereby, all characters involved in the concerning word are rendered to the judgement.

In succession, the contents of the coincident number counter "COIN" are examined and compared with the constant D1 (step 116), and if the former is less than the latter, the control advances to step 118, and otherwise, the contents of the "COIN" and k are reserved (step 117). Those operations in the steps 116 and 117 are based on a principle, say, less coincident words are abandoned at that time. Here, the reserved value of k is the number of the coincident words, and means this word is registered as one of candidate words clearing the judgements up to now. In addition, a plurality of areas are available for the above reservation, which are adapted to register thereon all words having coincident numbers more than the constant D1, which value may be 10 at most. Moreover, D1, although assumed to be a constant, may be made variable dynamically as a function of the word-constituting character number N every time at need. And, furthermore, it is judged whether or not the operations effected until now are executed for all words involved in the concerning word table (steps 118, 119) and if not the control returns to the step 102, and otherwise advances to step 120.

In succession, in the steps 120 and 121, a collation check in a word unit between the concerning word table and the read result is finished, and number of words, in the concerning word table having the coincident number more than D1 as well as the number of coincidences are preserved. Accordingly, the number of a word having the maximum coincident number is selected among the reserved candidate word group (step 120), and a word name corresponding thereto is transmitted to the outside via the post-processing circuit 9.

Hereupon, when the number of a word exerting the maximum number of coincidence is not uniquely determined, the word collation is unsatisfactory, and the result may be processed with some methods: the read result is delivered as it is; a plurality of words having greater numbers of coincidence are delivered; or both of them are delivered. In any case, the selection may be left on an operator. Otherwise, collation for all constituent characters of a word read again including vowels may be conducted.

Hereupon, although the coincident number counter "COIN" was counted up commonly for words, it is effective to count up the counter by weighting it with values to be added thereto depending on the attribute s. For, example, +3 is employed to weight the character code = 1 therewith yielded in step 106, or +1 is employed to weight if plurality of character codes are yielded in step 106. In addition, if no character code is yielded in the step 106, -1 may be applied as a penalty. This is one method to judge these words in terms of the total of scores for adopting in preference only one read result being yielded.

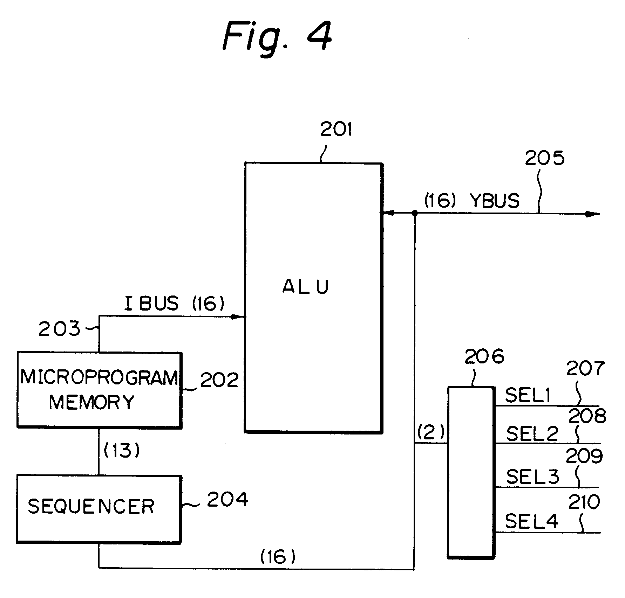

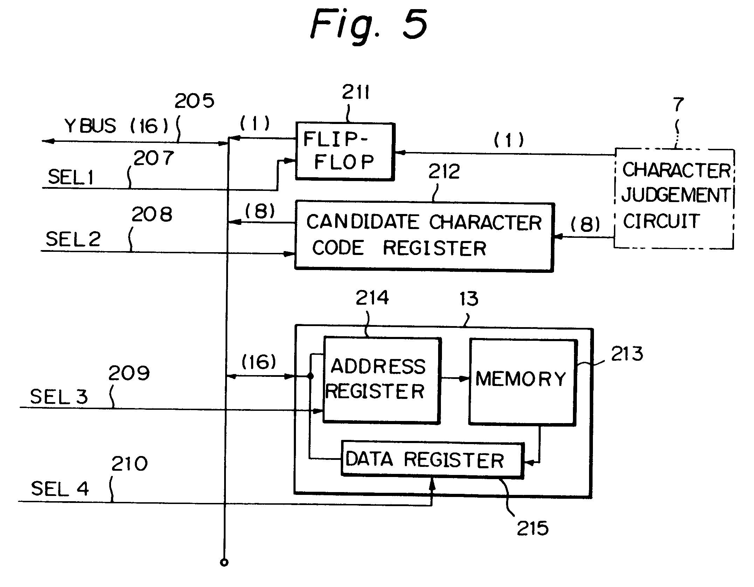

In the following, exemplary circuits of the post-processing circuit 9, word collating circuit 12, and word dictionary memory 13 to concretely execute the operation described above will be explained with reference to Figs. 4 and 5.

First, referring to Fig. 4, illustrating a microprocessor circuit to execute functions and controls of the post-processing circut 9 and the word collating circuit 12, designated at 201 is an arithmetic logic unit (hereinafter referred to as ALU) to which Advanced Micro Devices Inco., made AM 29116 and the like is fitted, 202 is a microprogram memory, and a microprogram stored therein is employed to operate the microprocessor circuit and an I/O circuit described later, 203 is an I bus composed of sixteen signal lines for interconnecting the above ALU 201 and the microprogram memory 202. The ALU 201 executes arithmetic operation in conformity with an instruction inputted from the IBUS 203. Likewise, designated at 204 is a sequencer providing addresses of the microprogram memory 202, which consists of four elements of AM 2911 for example. In addition, the ALU 201 is connected with the I/O circuit described later through a YBUS 205 for data delivery. Designated at 206 is a decoder for generating SEL1 signal 207 to SEL 4 signal 210 from two signals on the YBUS 205.

Here, a numerical value in ( ) indicates the number of signal lines.

Fig. 5 illustrates the I/O circuit connected to the Y bus 205 of the microprocessor circuit.

Designated at 211 is a flip-flop for storing therein a start signal from the character judgement circuit 7, the start signal being delivered to the Y bus 205 with use of the SEL 1 signal 207, and 212 is a register for storing a candidate character code issued from the character judgement circuit 7, data in this resister 212 being delivered to the YBUS 205 with use of the SEL2 signal 208. Moreover, in the word dictionary memory 13, designated at 213 is a memory for storing the concerning words, 214 is an address register for assigning addresses of the memory 213, and 215 is a data register for storing therein data from the memory 213. The address register 214 incorporates any data from the Y bus 205 with use of the SEL3 signal 209, while the data register 215 delivers any data to the Y bus 205 with use of the SEL 4 signal 210.

Although a certain preferred embodiment has been shown and described, it should be understood that many changes and modifications may be made threin without departing from the scope of the appended claims.

## Claims

1. An optical character reader apparatus comprising:
an optical system (3,4,11) for converting characters written on a document card (1) to an optical signal and further rendering said optical signal so converted to an electric signal;
a pre-processing circuit (5) connected to said optical system for converting said electric signal into a binary picture image signal, and taking out a picture image corresponding to one character from said binary picture image signal;
a feature extracting circuit (6) connected to said pre-processing circuit for extracting the features of the character in conformity with a predetermined procedure;
a character judgement circuit (7) connected to said feature extracting circuit for effecting the collation of the character concerned;
a dictionary memory (8) connected to said character judgement circuit containing previously registered feature data of characters and corresponding character codes of said characters, for permitting said character judgement circuit to collate said feature data from said feature extracting circuit with said feature data registered in said dictionary memory and to deliver character codes of coincident characters as a result of said collation;
a post-processing circuit (9) connected to said character judgement circuit and an output terminal (10) for effecting editing and output control, corresponding to said result of judgement in said character judgement circuit; and
a word collator circuit (12) connected to said post-processing circuit for effecting word collation in cooperation with said circuit;
wherein said word collator circuit includes:
a word dictionary memory (13) for previously registering words in word tables according to the number of characters constituting said word;
a word collation control part (14) connected to said post-processing circuit and said word dictionary memory for controlling the word collation;
a word table selecting part (15) connected to said word collation control part for selecting one of said word tables in said word dictionary memory in response to the number of characters constituting an extracted word;
a word-constituting character judgement part (18) connected to said word collation control part for judging whether or not the number of characters constituting the extracted word is greater than a prescribed number;
a vowel judgement part (19) connected to said word collation control part for judging whether or not respective constituent characters of the extracted words are vowels when said number of characters constituting the word extracted in said word constituting character number judgement part is greater than a prescribed number, and removing, if so, a constituent character judged to be a vowel among said constituent characters from the object to be collated;
a word collator part (17) connected to said word collation control part for collating the constituent characters of the extracted word yielded through said vowel judgement part with constituent characters of each word in said word table selected in said word table selecting part and for thereby evaluating the number of coincident characters; and
a candidate word retrieving part (16) connected to said word collation control part for selecting the candidate word having the largest number of the coincident characters in said word collator part.

2. An optical character reader apparatus according to claim 1, wherein said optical system includes:
(a) a document card conveyor mechanism for conveying a document card in conformity with a predetermined format;
(b) an illumination lamp (11) for illuminating the document card;
(c) a focusing lens (3) for focusing reflected light from the document card; and
(d) a photoelectric conversion sensor (4) for rendering the reflected light from the document card to photoelectric conversion to provide an electric signal.

3. An optical character reader apparatus according to claim 1 or claim 2 wherein the functions and controls of said post-processing circuit and said word collator circuit are executed by a microprocessor circuit.

4. An optical character reader according to claim 3, wherein said microprocessor includes: an arithmetic logic unit (201), for effecting arithmetic operation; a microprogram memory (202) for operating said microprocessor circuit in conformity with a microprogram stored therein; an I bus (203) composed of 16 signal lines for mutual connection of said arithmetic logic unit and said microprogram memory; a sequencer (204) connected to said microprogram memory for providing addresses of said microprogram memory; a Y bus (205) connected to said arithmetic logic unit for use in data delivery; an I/O circuit connected to said Y bus; and a decoder connected to said Y bus and said sequencer for generating a selection signal from two signals on the Y bus.

5. An optical character reader apparatus according to claim 4, wherein said I/O circuit includes: a flip-flop (211) connected to said character judgement circuit for storing a start signal from said character judgement circuit and transmitting it to said Y bus by an SEL 1 signal; a candidate character code register (212) connected to said character judgment circuit and the Y bus for storing a candidate character code delivered from said character judgement circuit and transmitting it to the Y bus by an SEL 2 signal; and, in said word dictionary memory, a memory (213) for storing words, an address register (214) assigning any address of the memory, and a data register (215) for storing data from said memory, said address register incorporating therein data from said Y bus based upon an SEL 3 signal while said data register delivering the concerning data to the Y bus based upon an SEL 4 signal.

6. An optical character reading method comprising the steps: registering feature data of characters and corresponding character codes of said characters in a dictionary memory (8);
converting characters written on a document card (1) to an optical signal and further rendering said optical signal so converted to an electric signal;
converting said electric signal into a binary picture image signal, and taking out a picture image corresponding to one character from said binary picture image signal;
extracting the features of the character in conformity with a predetermined procedure;
effecting the collation of the character concerned with said feature data registered in said dictionary memory and delivering character codes of coincident characters as a result of said collation;
effecting editing and output control, corresponding to said result of collation; and
in a word collator circuit (12) effecting word collation with the result of said character collation;
wherein said effecting the word collation comprises the following steps:
previously registering words in word tables in a word dictionary memory according to the number of characters constituting said word;
controlling the word collation by a word collation control part;
selecting one of said word tables in said word dictionary memory in response to the number of characters constituting an extracted word;
judging whether or not the number of characters constituting the extracted word is greater than a prescribed number;
judging whether or not respective constituent characters of the extracted words are vowels when said number of characters constituting the word is greater than a prescribed number, and removing, if so, a constituent character judged to be a vowel among said constituent characters from the object to be collated;
collating the constituent characters of the extracted word yielded through said vowel judgement with constituent characters of each word in said selected word table and for thereby evaluating the number of coincident characters; and
selecting the candidate word having the largest number of the coincident characters in said word collating.

## Patentansprüche

1. Optische Zeichenerkennungsvorrichtung, die aufweist:
ein optisches System (3,4,11) zum Umwandeln Von Zeichen, die auf einer Dokumentenkarte (1) geschrieben sind, in ein optisches Signal und weiterhin zum Wiedergeben des derart umgewandelten optischen Signals als ein elektrisches Signal;
eine Vorverarbeitungsschaltung (5), die mit dem optischen System verbunden ist, zum Umwandeln des elektrischen Signals in ein binäres Bild-Wiedergabe-Signal und zum Entnehmen einer Bild-Wiedergabe entsprechend einem Zeichen aus dem binären Bild-Wiedergabe-Signal;
eine Merkmalsextrahierungsschaltung (6), die mit der Vorverarbeitungsschaltung verbunden ist, zum Extrahieren der Merkmale aus dem Zeichen in Übereinstimmung mit einer vorgegebenen Prozedur;
eine Zeichenbeurteilungsschaltung (7), die mit der Merkmalsextrahierungsschaltung verbunden ist, zum Bewirken des Vergleichs des betreffenden Zeichens;
einen Verzeichnis-Speicher (8), der mit der Zeichenbeurteilungsschaltung verbunden ist und der zuvor registrierte Merkmalsdaten der Zeichen und entsprechende Zeichencodes der Zeichen enthält, um der Zeichenbeurteilungsschaltung zu erlauben, die Merkmalsdaten von der Merkmalsextrahierungsschaltung mit den Merkmalsdaten, die in dem Verzeichnis-Speicher gespeichert sind, zu vergleichen und Zeichencodes übereinstimmender Zeichen als Ergebnis des Vergleichs zu liefern;
eine Nachverarbeitungsschaltung (9), die mit der Zeichenbeurteilungsschaltung und einem Ausgangsanschluß (10) verbunden ist, zum Bewirken einer Editierung und einer Ausgangssteuerung entsprechend dem Ergebnis der Beurteilung in der Zeichenbeurteilungsschaltung; und
eine Wortvergleicherschaltung (12), die mit der Nachverarbeitungsschaltung verbunden ist, zum Bewirken des Wortvergleichs in Zusammenwirken mit dieser Schaltung;
wobei die Wortvergleicherschaltung enthält:
einen Wörterverzeichnis-Speicher (13) zum vorhergehenden Registrieren von Wörtern in Worttabellen gemäß der Anzahl der Zeichen, die das Wort bilden;
einen Wortvergleichssteuerabschnitt (14), der mit der Nachverarbeitungsschaltung und dem Wörterverzeichnis-Speicher verbunden ist, zum Steuern des Wortvergleichs;
einen Worttabellen-Auswahlabschnitt (15), der mit dem Wortvergleichssteuerabschnitt verbunden ist, zum Auswählen einer der Worttabellen in dem Wörterverzeichnis-Speicher in Antwort auf die Anzahl der Zeichen, die ein extrahiertes Wort bilden;
einen wortbildenden Zeichenbeurteilungsabschnitt (18), der mit dem Wortvergleichssteuerabschnitt verbunden ist, zum Beurteilen, ob die Anzahl der Zeichen, die das extrahierte Wort bilden, größer ist als eine vorgegebene Anzahl;
ein Vokalbeurteilungsabschnitt (19), der mit dem Wortvergleichssteuerabschnitt verbunden ist, zum Beurteilen, ob die bildenden Zeichen der extrahierten Worte jeweils Vokale sind oder nicht, wenn die Anzahl der Zeichen, die das Wort bilden, das in dem Beurteilungsabschnitt für die wortbildende Zeichenanzahl extrahiert wird, größer als eine vorgegebene Anzahl ist, und zum Entfernen, wenn das der Fall ist, eines bildenden Zeichens, das als Vokal unter den bildenden Zeichen beurteilt wird, von dem zu vergleichenden Objekt;
einen Wortvergleicherabschnitt (17), der mit dem Wortvergleichssteuerabschnitt verbunden ist, zum Vergleichen der bildenden Zeichen des extrahierten Wortes, das durch den Vokal-Beurteilungsabschnitt ermittelt wird, mit bildenden Zeichen jedes Wortes in der Worttabelle, die in dem Worttabellen-Auswahlabschnitt ausgewählt wird, und zum dadurch Ermitteln der Anzahl der übereinstinmenden Zeichen; und
einen Kandidatenwort-Leseabschnitt (16), der mit dem Wortvergleichssteuerabschnitt verbunden ist, zum Auswählen des Kandidatenworts, das die größte Anzahl von übereinstimmenden Zeichen in dem Wortvergleicherabschnitt hat.

2. Optische Zeichenerkennungsvorrichtung gemäß Anspruch 1, wobei das optische System aufweist:
(a) einen Dokumentenkarten-Zufuhrmechanismus zum Zuführen einer Dokumentenkarte in Übereinstimmung mit einem vorgegebenen Format;
(b) eine Beleuchtungslampe (11) zum Beleuchten der Dokumentenkarte;
(c) eine Fokussierungslinse (3) zum Fokussieren des reflektierten Lichts von der Dokumentenkarte; und
(d) einen photoelektrischen Umwandlungssensor (4) zum Ausführen einer photoelektrischen Umwandlung des reflektierten Lichts von der Dokumentenkarte, um ein elektrisches Signal zu erzeugen.

3. Optische Zeichenerkennungsvorrichtung gemäß Anspruch 1 oder Anspruch 2, wobei die Funktionen und die Steuerungen der Nachverarbeitungsschaltung und der Wortvergleicherschaltung von einer Mikroprozessorschaltung ausgeführt werden.

4. Optischer Zeichenerkenner gemäß Anspruch 3, wobei der Mikroprozessor aufweist: eine Arithmetiklogikeinheit (201) zum Bewirken einer Arithmetikoperation; einen Mikroprogrammspeicher (202) zum Betreiben der Mikroprozessorschaltung in Übereinstimmung mit einem Mikroprogramm, das in ihm gespeichert ist; einen I-Bus (203), der aus sechzehn Signalleitungen für eine gegenseitige Verbindung der Arithmetiklogikeinheit und des Mikroprogrammspeichers zusammengesetzt ist; einen Sequenzer (204), der mit dem Mikroprogrammspeicher zum Erzeugen von Adressen des Mikroprogrammspeichers verbunden ist; einen Y-Bus (205) der mit der Arithmetiklogikeinheit verbunden ist, zur Verwendung bei der Datenausgabe; eine I/O-Schaltung, die mit dem Y-Bus verbunden ist; und einen Decoder, der mit dem Y-Bus und dem Sequenzer zum Erzeugen eines Auswahlsignals aus zwei Signalen auf dem Y-Bus verbunden ist.

5. Optische Zeichenerkennungsvorrichtung gemäß Anspruch 4, wobei die I/O-Schaltung aufweist: ein Flip-Flop (211), das mit der Zeichenbeurteilungsschaltung verbunden ist, zum Speichern eines Startsignals von der Zeichenbeurteilungsschaltung und zum Senden des Signals zu dem Y-Bus durch ein SEL 1 Signal; ein Kandidatenzeichencoderegister (212), das mit der Zeichenbeurteilungsschaltung und dem Y-Bus verbunden ist, zum Speichern eines Kandidatenzeichencodes, der von der Zeichenbeurteilungsschaltung aus zugefuhrt wird, und zum Senden des Codes zu dem Y-Bus durch ein SEL 2 Signal; und einen Speicher (213) in dem Wortverzeichnis-Speicher zum Speichern von Wörtern, ein Adreßregister (214) zum Zuordnen einer Adresse des Speichers und ein Datenregister (215) zum Speichern von Daten vom Speicher, wobei das Adreßregister Daten von dem Y-Bus aus auf der Basis eines SEL 3 Signals aufnimmt, wahrend das Datenregister die betreffenden Daten an den Y-Bus auf der Basis eines SEL 4 Signals ausgibt.

6. Optisches Zeichenerkennungsverfahren, das die folgenden Schritte aufweist:
Registrieren von Merkmalsdaten von Zeichen und von entsprechenden Zeichencodes der Zeichen in einem Verzeichnis-Speicher (8);
Umwandeln der Zeichen, die auf einer Dokumentenkarte (1) geschrieben sind, in ein optisches Signal und weiterhin Wiedergeben des derart umgewandelten optischen Signals als ein elektrisches Signal;
Umwandeln des elektrischen Signals in ein binäres Bildwiedergabesignal und Entnehmen einer Bildwiedergabe entsprechend einem Zeichen aus dem binären Bildwiedergabesignal;
Extrahieren der Merkmale aus dem Zeichen in Übereinstimmung mit einer vorgegebenen Prozedur;
Bewirken des Vergleichs des betreffenden Zeichens mit den Merkmalsdaten, die in dem Verzeichnisspeicher registriert sind und Ausgeben von Zeichencodes übereinstimmender Zeichen als Ergebnis des Vergleichs;
Bewirken der Editierung und der Ausgangssteuerung entsprechend dem Ergebnis des Vergleichs; und
Bewirken eines Wortvergleichs mit dem Ergebnis des Zeichenvergleichs in einer Wortvergleicherschaltung (12);
wobei das Bewirken des Wortvergleichs die folgenden Schritte aufweist:
vorhergehendes Registrieren von Worten in Worttabellen in einem Wörterverzeichnisspeicher gemäß der Anzahl der Zeichen, die das Wort bilden;
Steuern des Wortvergleichs durch einen Wortvergleichssteuerabschnitt;
Auswählen einer der Worttabellen in dem Wörterverzeichnisspeicher in Antwort auf eine Anzahl von Zeichen, die ein extrahiertes Wort bilden;
Beurteilen, ob die Anzahl der Zeichen, die das extrahierte Wort bilden, größer als eine vorgegebene Anzahl ist oder nicht;
Beurteilen, ob die bildende Zeichen der extrahierten Worte jeweils Vokale sind oder nicht, wenn die Anzahl der Zeichen, die das Wort bilden, größer ist als eine vorgeschriebene Anzahl, und Entfernen, wenn das der Fall ist, eines bildenden Zeichens, das als Vokal unter den bildenden Zeichen beurteilt wird, aus dem zu vergleichenden Objekt;
Vergleichen der bildenden Zeichen des extrahierten Wortes, das durch die Vokalbeurteilung ermittelt wird, mit bildenden Zeichen jedes Wortes in der ausgewählten Worttabelle und dadurch Ermitteln der Anzahl von übereinstimmenden Zeichen; und
Auswählen des Kandidatenworts mit der größten Anzahl der übereinstimmenden Zeichen beim Wortvergleich.

## Revendications

1. Appareil de lecture optique de caractères, comportant :
un système optique (3, 4, 11) destiné à convertir des caractères écrits sur une carte document (1) en un signal optique et à constituer en outre un signal électrique à partir dudit signal optique ainsi converti ;
un circuit (5) de prétraitement connecté audit système optique pour convertir ledit signal électrique en un signal d'image binaire, et à extraire une image correspondant à un caractère dudit signal d'image binaire ;
un circuit (6) d'extraction de caractéristiques connecté audit circuit de prétraitement pour extraire les caractéristiques du caractère en conformité avec un processus prédéterminé ;
un circuit (7) de jugement de caractères connecté audit circuit d'extraction de caractéristique pour effectuer l'assemblage du caractère concerné ;
une mémoire (8) de dictionnaire connectée audit circuit de jugement de caractères, contenant des données de caractéristiques de caractères précédemment enregistrées et des codes de caractères correspondants desdits caractères, pour permettre audit circuit de jugement de caractères d'assembler lesdites données de caractéristiques provenant dudit circuit d'extraction de caractéristique avec lesdites données de caractéristiques enregistrées dans ladite mémoire de dictionnaire et de délivrer des codes de caractères coïncidents en tant que résultat dudit assemblage ;
un circuit (9) de post-traitement connecté audit circuit de jugement de caractères et à une borne (10) de sortie pour effectuer une commande d'édition et de sortie, correspondant audit résultat du jugement dans ledit circuit de jugement de caractères ; et
un circuit (12) d'assemblage de mot connecté audit circuit de post-traitement pour effectuer un assemblage de mot en coopération avec ledit circuit,
caractérisé en ce que le circuit d'assemblage de mot comprend :
une mémoire (13) de dictionnaire de mots destinée à enregistrer au préalable des mots dans des tables de mots en fonction du nombre de caractères constituant ledit mot ;
une partie (14) de commande d'assemblage de mot connectée audit circuit de post-traitement et à ladite mémoire de dictionnaire de mots pour commander l'assemblage de mot ;
une partie (15) de sélection de tables de mots connectée à ladite partie de commande d'assemblage de mot pour sélectionner l'une desdites tables de mots dans ladite mémoire de dictionnaire de mots en réponse au nombre de caractères constituant un mot extrait ;
une partie (18) de jugement de caractères de constitution de mot connectée à ladite partie de commande d'assemblage de mot pour juger si le nombre de caractères constituant le mot extrait est supérieur ou non à un nombre prescrit ;
une partie (19) de jugement de voyelles connectée à ladite partie de commande d'assemblage de mot pour juger si des caractères constitutifs respectifs des mots extraits sont ou non des voyelles lorsque ledit nombre de caractères constituant le mot extrait dans ladite partie de jugement du nombre de caractères constituant le mot est plus grand qu'un nombre prescrit, et pour enlever, s'il en est ainsi, un caractère constitutif jugé comme étant une voyelle parmi lesdits caractères constitutifs dudit objet à assembler ;
une partie (17) d'assemblage de mot connectée à ladite partie de commande d'assemblage de mot pour assembler les caractères constitutifs du mot extrait donné par l'intermédiaire de ladite partie de jugement de voyelles avec des caractères constitutifs de chaque mot dans ladite table de mots sélectionnée dans ladite partie de sélection de tables de mots et pour évaluer ainsi le nombre de caractères coïncidents ; et
une partie (16) de prise en charge d'un mot candidat connectée à ladite partie de commande d'assemblage de mot pour sélectionner le mot candidat ayant le plus grand nombre de caractères coïncidents dans ladite partie d'assemblage de mot.

2. Appareil de lecture optique de caractères selon la revendication 1, dans lequel ledit système optique comprend :
(a) un mécanisme transporteur de carte document destiné à transporter une carte document en conformité avec un format prédéterminé ;
(b) une lampe d'éclairage (11) destinée à éclairer la carte document ;
(c) une lentille (3) de focalisation destinée à focaliser la lumière réfléchie provenant de la carte document ; et
(d) un capteur (4) à conversion photoélectrique destiné à soumettre la lumière réfléchie provenant de la carte document à une conversion photoélectrique pour produire un signal électrique.

3. Appareil de lecture optique de caractères selon la revendication 1 ou la revendication 2, dans lequel les fonctions et les commandes dudit circuit de post-traitement et dudit circuit d'assemblage de mot sont exécutées par un circuit à microprocesseur.

4. Lecteur optique de caractères selon la revendication 3, dans lequel ledit microprocesseur comprend : une unité arithmétique et logique (201) destinée à effectuer une opération arithmétique ; une mémoire (202) de microprogramme pour faire fonctionner ledit circuit à microprocesseur en conformité avec un microprogramme stocké dans cette mémoire ; un bus I (203) composé de 16 lignes de signaux pour une connexion mutuelle de ladite unité arithmétique et logique et de ladite mémoire de microprogramme ; un séquenceur (204) connecté à ladite mémoire de microprogramme pour produire des adresses de ladite mémoire de microprogramme ; un bus Y (205) connecté à ladite unité arithmétique et logique pour une utilisation dans la délivrance de données ; un circuit d'entrée/sortie connecté audit bus Y ; et un décodeur connecté audit bus Y et audit séquenceur pour générer un signal de sélection à partir de deux signaux sur le bus Y.

5. Appareil de lecture optique de caractères selon la revendication 4, dans lequel ledit circuit d'entrée/sortie comprend : une bascule (211) connectée audit circuit de jugement de caractères pour stocker un signal de départ à partir dudit circuit de jugement de caractères et le transmettre audit bus Y par un signal SEL 1 ; un registre (212) de code de caractère candidat connecté audit circuit de jugement de caractères et au bus Y pour stocker un code de caractère candidat délivré depuis ledit circuit de jugement de caractères et pour le transmettre au bus Y par un signal SEL 2 ; et, dans ladite mémoire de dictionnaire de mots, une mémoire (213) destinée à stocker des mots, un registre (214) d'adresse destiné à affecter une adresse quelconque de la mémoire, et un registre (215) de données destiné à stocker des données provenant de ladite mémoire, ledit registre d'adresse renfermant des données provenant dudit bus Y sur la base d'un signal SEL 3, tandis que ledit registre de données délivre les données concernées au bus Y sur la base d'un signal SEL 4.

6. Procédé de lecture optique de caractères, comprenant les étapes qui consistent :
à enregistrer des données de caractéristiques de caractères et des codes de caractères correspondants desdits caractères dans une mémoire (8) de dictionnaire ;
à convertir des caractères écrits sur une carte document (1) en un signal optique et à constituer en outre un signal électrique à partir dudit signal optique ainsi converti ;
à convertir ledit signal électrique en un signal d'image binaire et à retirer une image correspondant à un caractère dudit signal d'image binaire ;
à extraire les caractéristiques du caractère en conformité avec un processus prédéterminé ;
à effectuer l'assemblage du caractère concerné avec lesdites données de caractéristiques enregistrées dans ladite mémoire de dictionnaire et à délivrer des codes de caractères coïncidents en tant que résultat dudit assemblage ;
à effectuer une édition et une commande de sortie correspondant audit résultat de l'assemblage ; et
dans un circuit (12) d'assemblage de mot, à effectuer un assemblage de mot avec le résultat dudit assemblage de caractère,
dans lequel le fait d'effectuer l'assemblage de mot comprend les étapes suivantes qui consistent :
à enregistrer au préalable des mots dans des tables de mots dans une mémoire de dictionnaire de mots en fonction du nombre de caractères constituant ledit mot ;
à commander l'assemblage de mot par une partie de commande d'assemblage de mots ;
à sélectionner l'une desdites tables de mots dans ladite mémoire de dictionnaire de mots en réponse au nombre de caractères constituant un mot extrait ;
à juger si le nombre de caractères constituant le mot extrait est plus grand ou non qu'un nombre prescrit ;
à juger si des caractères constitutifs respectifs des mots extraits sont ou non des voyelles lorsque ledit nombre de caractères constituant le mot est plus grand qu'un nombre prescrit, et à éliminer, s'il en est ainsi, un caractère constitutif jugé comme étant une voyelle parmi lesdits caractères constitutifs provenant de l'objet à assembler ;
à assembler les caractères constitutifs du mot extrait donné par ledit jugement de voyelles avec des caractères constitutifs de chaque mot dans ladite table de mots sélectionnée et à évaluer ainsi le nombre de caractères coïncidents ; et
à sélectionner le mot candidat ayant le plus grand nombre des caractères coïncidents dans ledit assemblage de mot.
